# EUROPEAN PATENT APPLICATION

(11) **EP 1 381 234 A1**
(43) Date of publication of application: **14.01.2004**
(21) Application number: 03009599.6
(22) Date of filing: 29.04.2003
(51) Int. Cl.: H04N 5/913

(54) **Method and system for the prevention of copyright piracy**

(30) Priority: 21.05.2002 GB 0211612
(71) Applicant: EASTMAN KODAK COMPANY, Rochester, New York 14650 (US)
(72) Inventor: Vernon, Richard, Harrow Middlesex HA1 4TY (GB)
(74) Representative: Freeman, Avi

(57) **Abstract**

The invention provides a method of prevention of copyright piracy, comprising the step of, at an event, transmitting a signal (2) to interfere with the operation of a recording device such as a video camera (10), thereby interrupting any recording by the recording device (10) occurring at the event.

## Description

### FIELD OF THE INVENTION

The present invention relates to a method and system for the prevention of copyright piracy. In particular the invention relates to a method and system for the prevention of in-theatre copying of a film or show. The invention relates to the prevention of copyright piracy in respect of any event, the reproduction of which might be protected by copyright. For example, films, plays and sporting events such as football matches.

### BACKGROUND OF THE INVENTION

Typically, distribution rights of films are arranged between film distributors and cinema companies or individual cinemas in which the film will be shown. Usually, the cinema company or individual cinema will pay the film distributors for the rights to show the film, the cost of which is recouped through admission charges to the cinema.

In the case of sporting events such as a football match, a sports broadcaster usually pays the football club for the right to record and broadcast the matches played at their stadium.

In both cases, it is important and desirable to stop unauthorised copying of the recording of the event i.e. football match or film. Typically, criminals under the guise of a normal viewer enter the cinema with a video camera and record the film directly from the cinema screen onto a cassette, cartridge or other recording medium in the video camera. The recorded film is then transferred onto other media e.g. onto videotapes or via the internet, for illegal distribution on the black market.

In the case, of a football match the criminal sits in the stadium and records the match with a video camera. Again, once the event has been illegally recorded it can be transferred onto alternative media and distributed on the black market.

This is very undesirable for the official distributors. Firstly, it represents lost revenue. Secondly, there is the risk that the reputation of the official distributor will be harmed if a low quality product is passed off as the product of the official distributor.

A method and system for overcoming these problems is required.

### SUMMARY OF THE INVENTION

According to the present invention, there is provided a method of prevention of copyright piracy, comprising the step of, at an event, transmitting a signal to interfere with the operation of a recording device e.g. a video camera, thereby interrupting any recording by the recording device at the event.

Preferably, the signal is an infrared signal comprising a sequence of coded pulses. More preferably, a plurality of signals are transmitted, each signal corresponding to a known sequence of coded pulses of the remote control of one or more recording devices, such as video camera remote controls. The signals are chosen to correspond to the known sequence of coded pulses of the remote controls of a selected number of the most popular video cameras so that it is extremely unlikely that a criminal will be able to continuously record the event.

In one example, the transmission of the signal or signals is repeated at a predetermined interval, that may be regular, so that if a criminal realises that the camera has stopped recording and manually activates the camera to recommence recording, it will again be turned off. This ensures that the final recording by the camera will be essentially unwatchable, as, if anything at all is recorded, it will be continuously interrupted.

Preferably, the transmission is timed to go out at a loud point during the event so that the chance of the criminal realising that the camera has been turned off is reduced.

According to a second aspect of the present invention, there is provided an anti-piracy system having a transmitter adapted to transmit one or more signals at predetermined frequencies and a control unit to operate the transmitter. Preferably, the control unit is adapted to operate the transmitter automatically.

Preferably, the control unit comprises a programmable memory adapted to receive data relating to one or more signals for transmission by the transmitter.

In one example, the signals are selected to correspond to a known sequence of coded pulses of the remote control of one or more recording devices, such as video camera remote control.

### ADVANTAGEOUS EFFECT OF THE INVENTION

The invention provides a method and system for interrupting the unauthorised recording of an event. The method and system are both simple and robust.

### BRIEF DESCRIPTION OF THE DRAWINGS

Examples of the present invention will now be described with reference to the accompanying drawings, in which:
Figure 1 shows a cinema fitted with an anti-piracy system according to the present invention; and,
Figure 2 shows a schematic representation of the transmission system used in the present invention.

### DETAILED DESCRIPTION OF THE INVENTION

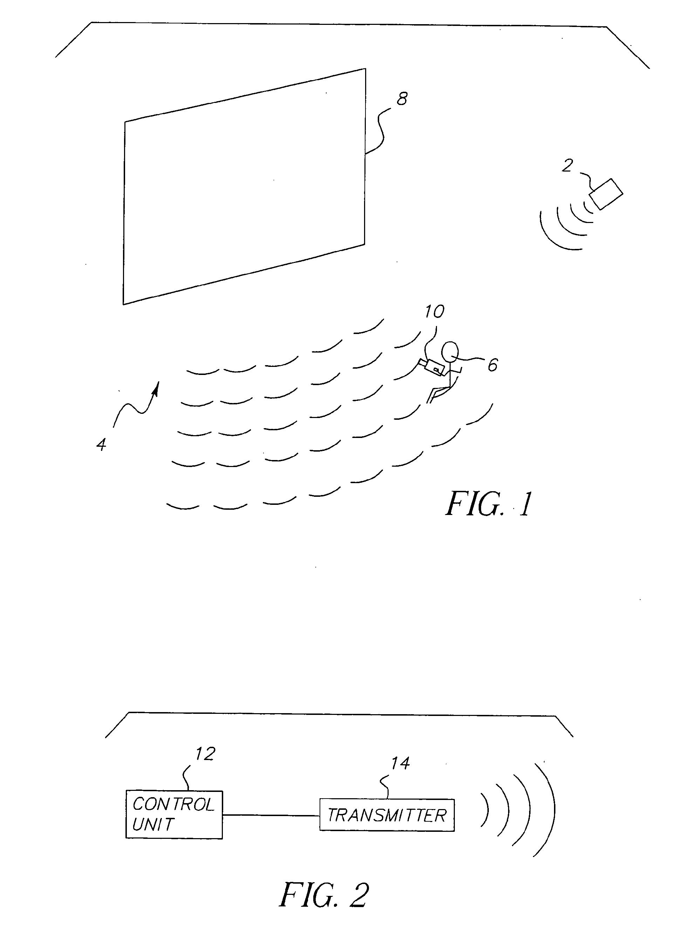

As mentioned above, Figure 1 shows a cinema fitted with an anti-piracy system according to the present invention. In this example, the anti-piracy system comprises a transmitter 2 positioned in a concealed location within a cinema auditorium 4. A viewer 6 is attempting to record the film being shown on the screen 8 with a concealed recording device, in this case a camera 10. The transmitter 2 is controlled by a control unit to provide a signal comprising a known sequence of coded pulses of the remote control of the recording device. The signal provided by the transmitter 2 is usually an infrared signal, comprising a sequence of coded pulses at certain frequencies corresponding to a signal usually produced by the remote control unit of the viewer's camera 10.

The signal is controlled in accordance with the camera manufacturer's specification such that it has the effect of stopping or pausing the recording i.e. it activates the STOP or PAUSE function of the camera. An advantage of pausing the recording is that the pause is often silent. Therefore a user of the camera will be unaware that an interruption of the recording has occurred.

Alternatively, the signal may be chosen to have any effect on the camera so that the recording of the film is interrupted. For example, a sequence of signals could be provided such that a first signal stops the recording and a second signal rewinds a tape onto which the recording is being made. This will ensure that if the viewer 6 then tries to recommence recording he will record over what ever he has recorded already, thereby making the recording disjointed.

Figure 2 shows a schematic representation of the transmission system used in the present invention. The transmission system comprises a control unit 12 and transmitter 14 connected thereto. The control unit 12 comprises a memory (not shown) that is adapted to store data relating to a number of signals to be transmitted by the transmitter 14. When the system is activated, the control unit 12 communicates with the transmitter 14 causing it to transmit an infrared signal into the cinema auditorium. As explained above this may be a single signal or it may be a sequence of signals designed to ensure that any recording made in the auditorium will be disjointed.

When the transmission system is initially configured the data relating to the required frequencies is supplied to the memory in the control unit 12. In addition any desired sequence of signals may be programmed into the control unit. The data relating to the frequencies may be obtained from various camera manufacturers.

The control unit 12 optionally comprises a receiver 16 to receive sound from the auditorium to enable an automatic determination of the sound level therein. The control unit 12 is adapted to communicate with the transmitter 14 causing it to transmit an infrared signal into the cinema auditorium when the sound level in the auditorium is high e.g. above a predetermined threshold sound level. This reduces the chance of a user of the camera hearing that its operation has been interrupted. Alternatively, the recording can be interrupted at a specified point during a film when it is known that an average viewer will be particularly engrossed in the film. This also achieves the effect of reducing the chance of a user of the camera realising that its operation has been interrupted.

It will be understood that a single control unit can store data relating to many different models of camera such that only one transmission system is required for each cinema. Where only a single transmission system is used for a cinema, it is preferable that the transmission system is configured to cycle through signals corresponding to each of the different video cameras it has been programmed to interfere with in sequence.

Any suitable component may be used for the control unit. For example a programmable microprocessor may be used, programmed to operate as described above. Alternatively, an ASIC or any other suitable electronic component maybe used.

The description above has been in relation to the use of an infrared transmission to cause interruption in the video recording of an event such as the cinema screening of a film. The invention applies also to the unauthorised recording in any way of such an event. For example, the invention also applies to, amongst others, the unauthorised recording of a music concert or stand-up comedy performance.

## Claims

1. A method of prevention of copyright piracy, comprising the step of, at an event, transmitting a signal to interfere with the operation of a recording device, thereby interrupting any recording by the recording device occurring at the event.

2. A method according to claim 1, in which the signal is an infrared signal comprising a sequence of coded pulses.

3. A method according to claim 1 or 2, in which the recording device is a video camera.

4. A method according to claim 1 or 2, in which a plurality of signals are transmitted, each signal corresponding to a known sequence of coded pulses of the remote control of one or more recording devices.

5. A method according to claim 4, in which the plurality of signals are chosen to correspond to the signals of the remote control units of a selected number of video cameras.

6. A method according to claim 1, in which the transmission of the signal is repeated periodically.

7. A method according to claim 4, in which the plurality of signals are transmitted in sequence, said transmission of the plurality of signals being repeated periodically.

8. A method according to claim 1, in which the signal is selected to activate a STOP function of the recording device, thereby stopping the recording of the recording device.

9. A method according to claim 1, in which the signal is selected to activate a PAUSE function of the recording device, thereby pausing the recording of the recording device.

10. A method according to claim 1, in which the signal is transmitted at a loud point during the event, thereby reducing the chance of a user of the recording device realising that recording has been interrupted.

11. A method according to claim 10, in which the loud point is identified automatically by an associated control unit.

12. An anti-piracy system comprising:
a transmitter adapted to transmit one or more predetermined signals; and,
a control unit to operate the transmitter, wherein the predetermined signals are selected to correspond to a known sequence of coded pulses of the remote control of one or more recording devices.

13. A system according to claim 12, in which the control unit comprises a programmable memory adapted to receive data relating to one or more signal transmissions for transmission by the transmitter.

14. A system according to claim 13, in which the data correspond to a known sequence of coded pulses of the remote control of one or more video cameras.

15. A system according to claim 12, in which the control unit comprises a microprocessor.
